# EUROPEAN PATENT APPLICATION

(11) **EP 2 533 017 A2**
(43) Date of publication of application: **12.12.2012**
(21) Application number: 11006597.6
(22) Date of filing: 11.08.2011
(51) Int. Cl.: G01D 4/00

(54) **Multi-utility service monitoring and control system**

(30) Priority: 09.06.2011 EP 11004695
(71) Applicant: ABB AG, 68309 Mannheim (DE)
(72) Inventor: NÄDELE, Martin, Dr., 8050 Zürich (CH); GANZ, Christopher, Dr., 8046 Zürich (CH)
(74) Representative: Partner, Lothar

(57) **Abstract**

The invention is about a multi-utility service monitoring and control system (1) for monitoring the inflow of energy, disposables and information to a home, which comprises

- a multi-utility master meter (2) for monitoring the inflow of a plurality of different utility service types, which includes a central processing unit, (3) programming controls, (4) and a plurality of meter sensor connections (5),

- a plurality of utility meter sensors (6, 7, 8, 9, 10, 11) connected to said master meter (2), at least a first portion of said utility meter sensors (6, 7) having means to measure inflow of energy to the home, a second portion (8, 9) of said utility meter sensors having means to measure the inflow of disposables to the home, and a third portion (10, 11) of said utility meter sensors having means to measure the inflow of information to the home, and possibly a fourth portion (12, 13) of said utility meter sensors having means to measure the outflow of disposables from the home.

## Description

The invention relates to a multi-utility service monitoring and control system for monitoring the inflow of energy, disposables and information to a home.

Customers at homes today receive more utility services than just power and want to optimize cost.

Some customers do not just want to optimize their utility cost, but also the overall economic impact.

Smartmeters are expensive, and there is so far little commercial incentive for endusers and/or homeowners to invest in them.

As part of the various smartgrid initiatives in different parts of the world, smartmeters are rolled out as well. A smartmeter is a meter that can send metered data to a central accounting instance, display consumption information to local users, and receive information, such as rates or device actuation, from the central infrastructure, e.g a utility. There already some thoughts known to combine electrical meters with gas meters:

It is the object of the present invention to further improve the applicability of smartmeters for home applications, reducing total smartmetering costs per home, creating incentives for the home to invest in such meter, and to offer new and billable optimization services.

According to the invention the above object is achieved by a multi-utility service monitoring and control system with the features of claim 1.

According to the invention, the multi-utility service monitoring and control system comprises
- a multi-utility master meter for monitoring the inflow of a plurality of different utility service types, which includes a central processing unit, programming controls, and a plurality of meter sensor connections,
- a plurality of utility meter sensors connected to said master meter, at least a first portion of said utility meter sensors having means to measure inflow of energy to the home, a second portion of said utility meter sensors having means to measure the inflow of disposables to the home, and a third portion of said utility meter sensors having means to measure the inflow of information to the home.

Thus the advantage of the invention is the creation of a combined meter for all utility services in the home, like electric power, thermal energy transfer, gas, fresh water, telephone, TV, computing, etc.

In an advantageous embodiment of the invention, a fourth portion of said utility meter sensors has means to measure the outflow of disposables from the home.

In an advantageous embodiment of the invention, the master meter further comprises means for receiving and storing of data containing information about the availability and current cost of energy and/or disposables and/or information from various suppliers of such energy and/or disposables and/or information, and whereby the central processing unit further comprises means for proposing optimal supply scenarios for energy, and/or disposables and/or information based on pre-programmed decision criteria.

The system thus is able to propose cost/eco-optimal substitutions, e.g. using gas or electricity for heating according to price and availability.

In an advantageous embodiment of the invention, the master meter further comprises means for determining and presenting to the user of the home information concerning the economic analysis of the supply of energy and/or disposables and/or information to and from the home.

The system thus is able to also measure "outgoing utilities", e.g. rain water, waste water, solid waste, e.g. garbage chute analysis, garbage can weighting, and to present to the user a so-called home eco impact analysis.

In an advantageous embodiment of the invention, the master meter further comprises means for adding additional meter sensors and/or actors. In an advantageous embodiment of the invention, the master meter further comprises means for adding additional processing software components.

Thus the invention creates an extensible system to add new sensors, actors, and processing SW components.

In a further advantageous embodiment of the invention, the master meter further comprises means to remotely retrieve, monitor, visualize and/or optimize the data for one user. The user could do this for example with a Smartphone using a specific application program or a so-called "app".

In a further advantageous embodiment of the invention, the master meter further comprises means to remotely retrieve, monitor, visualize and/or optimize the data for a multitude of users in a building or in the neighbourhood or in a city or in a virtual organization. The multitude of users could for example be a specific group in a virtual social network like the known "Facebook" social network, or others.

The system according to the invention supports a home user or a multitude of users in achieving home eco impact goals, e.g. according to socio-political goals, government financial incentives, or in a competitive gaming setting, by normalizing the home utility consumption and combining it with server-side information lookup and calculations.

Advantageous embodiments are described in the characteristic features of the dependent claims.

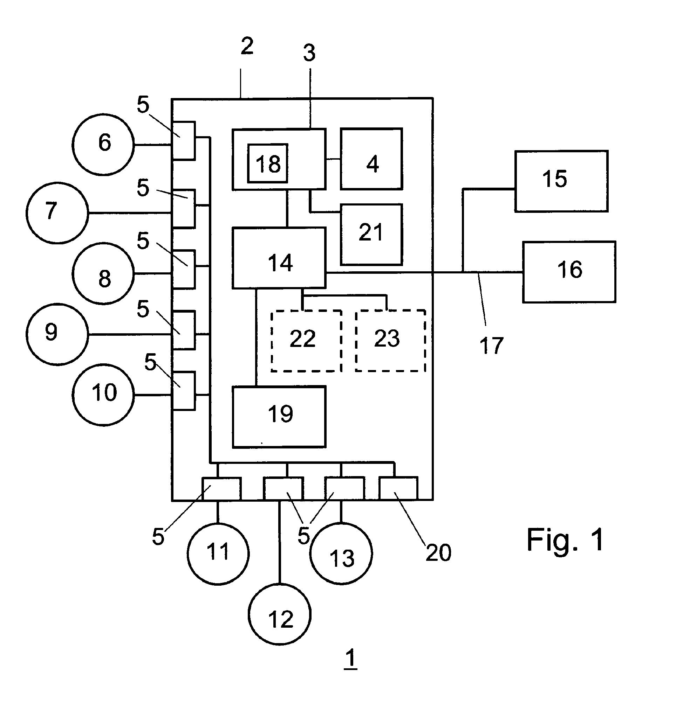

The invention will be described in greater detail by description of an embodiment with reference to the accompanying drawing, wherein
Fig. 1 shows a schematic principle of a multi-utility service monitoring and control system according to the invention.

Figure 1 shows a multi-utility service monitoring and control system 1 for monitoring the inflow of energy, disposables and information to a home. The system 1 comprises a multi-utility master meter 2 for monitoring the inflow of a plurality of different utility service types. The master meter 2 which includes a central processing unit 3, programming controls 4 , and a plurality of meter sensor connections 5.

The system 1 further comprises a plurality of utility meter sensors 6, 7, 8, 9, 10 connected to said master meter 2. A first portion of said utility meter sensors 6, 7 has means to measure inflow of energy to the home, for example sensor 6 can be an electricity meter, sensor 7 can be a thermal energy transfer meter.

A second portion of said utility meter sensors 8, 9 has means to measure the inflow of disposables to the home. For example, sensor 7 can measure gas, sensor 8 can measure fresh water.

A third portion of said utility meter sensors 10, 11 has means to measure the inflow of information to the home. For example, sensor 10 can measure digital TV information flow, sensor 11 can measure computer data flow.

A fourth portion of said utility meter sensors 12, 13 have means to measure the outflow of disposables from the home. For example, sensor 12 can measure waste water, sensor 13 can measure garbage can weight.

The master meter further comprises means 14 for receiving and storing of data containing information about the availability and current cost of energy and/or disposables and/or information from various suppliers 15, 16 of such energy and/or disposables and/or information. The information from the suppliers 15, 16 can get to the master meter 2 via known communication ways 17, wirebound or wireless.

The central processing unit 3 further comprises means 18 for proposing optimal supply scenarios for energy, and/or disposables and/or information based on pre-programmed decision criteria.

The master meter 2 further comprises means 19 for determining and presenting to the user of the home information concerning the economic analysis of the supply of energy and/or disposables and/or information to and from the home.

The master meter 2 further comprises means 20 for adding additional meter sensors and/or actors.

The master meter 2 further comprises means 21 for adding additional processing software components.

The master meter 2 further comprises means 22 to remotely retrieve, monitor, visualize and/or optimize the data for one user. This is a so-called Smartphone option, as the user could do this for example with a Smartphone using a specific application program or a so-called "app".

In addition or alternatively to the means 22, the master meter 2 further comprises means 23 to remotely retrieve, monitor, visualize and/or optimize the data for a multitude of users in a building or in the neighbourhood or in a city or in a virtual organization. The multitude of users could for example be a specific group in a virtual social network like the known "Facebook" social network, or others.

Means 22 and 23 are shown in dotted lines. This shall make clear that the means 22 and 23 are additional options that may be part of a master meter 22 according to the invention, either one of them or both. So a possible embodiment is a master meter as shown in figure 1, but not having means 22, 23. Another possible embodiment is a master meter as shown in figure 1, having additional means 22, but not having means 23. Yet another possible embodiment is a master meter as shown in figure 1, having additional means 23, but not having means 22.

The invention has the potential of both reducing total smartmetering costs per home, creating incentives for the home to invest in such meter, and to offer new and billable optimization services.

### List of reference signs

- 1: system
- 2: multi-utility master meter
- 3: central processing unit
- 4: programming controls
- 5: meter sensor connection
- 6: electricity sensor
- 7: thermal energy transfer sensor
- 8: gas sensor
- 9: fresh water meter
- 10: digital TV information sensor
- 11: computer data sensor
- 12: waste water meter
- 13: garbage can weight meter
- 14: for receiving and storing of data containing information about the availability and current cost of energy and/or disposables and/or information
- 15: supplier
- 16: supplier
- 17: communication way
- 18: means for proposing optimal supply scenarios for energy, and/or disposables and/or information based on pre-programmed decision criteria
- 19: for determining and presenting to the user of the home information concerning the economic analysis of the supply of energy and/or disposables and/or information to and from the home
- 20: means for adding additional meter sensors and/or actors
- 21: means for adding additional processing software components
- 22: means to remotely retrieve, monitor, visualize and/or optimize the data for one user
- 23: means to remotely retrieve, monitor, visualize and/or optimize the data for a multitude of users in a building or in the neighbourhood or in a city or in a virtual organization

## Claims

1. Multi-utility service monitoring and control system (1) for monitoring the inflow of energy, disposables and information to a home, which comprises
- a multi-utility master meter (2) for monitoring the inflow of a plurality of different utility service types, which includes a central processing unit (3), programming controls (4), and a plurality of meter sensor connections (5),
- a plurality of utility meter sensors (6, 7, 8, 9, 10, 11,12,13) connected to said master meter (2), at least a first portion of said utility meter sensors (6, 7) having means to measure inflow of energy to the home, a second portion (8, 9) of said utility meter sensors having means to measure the inflow of disposables to the home, and a third portion (10, 11) of said utility meter sensors having means to measure the inflow of information to the home.

2. Multi-utility service monitoring and control system (1) according to claim 1, whereby a fourth portion (12, 13) of said utility meter sensors has means to measure the outflow of disposables from the home.

3. Multi-utility service monitoring and control system (1) according to claim 1 or 2, whereby the master meter (2) further comprises means (14) for receiving and storing of data containing information about the availability and current cost of energy and/or disposables and/or information from various suppliers (15, 16) of such energy and/or disposables and/or information, and whereby the central processing unit (3) further comprises means (18) for proposing optimal supply scenarios for energy, and/or disposables and/or information based on pre-programmed decision criteria.

4. Multi-utility service monitoring and control system (1) according to claim 1 or 2, whereby the master meter (2) further comprises means (19) for determining and presenting to the user of the home information concerning the economic analysis of the supply of energy and/or disposables and/or information to and from the home.

5. Multi-utility service monitoring and control system (1) according to claim 1 or 2, whereby the master meter (2) further comprises means (20) for adding additional meter sensors and/or actors.

6. Multi-utility service monitoring and control system (1) according to claim 1 or 2, whereby the master meter (2) further comprises means (21) for adding additional processing software components.

7. Multi-utility service monitoring and control system (1) according to claim 1 or 2, whereby the master meter (2) further comprises means (22) to remotely retrieve, monitor, visualize and/or optimize the data for one user.

8. Multi-utility service monitoring and control system (1) according to claim 1 or 2, whereby the master meter (2) further comprises means (23) to remotely retrieve, monitor, visualize and/or optimize the data for a multitude of users in a building or in the neighbourhood or in a city or in a virtual organization.
